# EUROPEAN PATENT SPECIFICATION

(11) **EP 1 649 480 B1**
(45) Date of publication and mention of the grant of the patent: **23.02.2011**
(21) Application number: 04778820.3
(22) Date of filing: 21.07.2004
(51) Int. Cl.: H01J 9/24, H01J 17/16, H01J 17/49, B29C 33/38

(54) **MASTER MOLD FOR DUPLICATING FINE STRUCTURE AND PRODUCTION METHOD THEREOF**
MASTER-FORM ZUR DUPLIKATION EINER FEINSTRUKTUR UND HERSTELLUNGSVERFAHREN DAFÜR
MODELE-MAITRE POUR REPRODUIRE UNE STRUCTURE FINE ET PROCEDE DE PRODUCTION DE CELUI-CI

(30) Priority: 31.07.2003 JP 2003204636
(43) Date of publication of application: 26.04.2006
(73) Proprietor: 3M Innovative Properties Company, St. Paul, MN 55133-3427 (US)
(72) Inventor: SUGIMOTO, Takaki, Sumitomo 3M Limited, Sagamihara, Kanagawa 229-1185 (JP); WILLIAMS, Todd R., Saint Paul, MN 55133-3427 (US); MCGUIRE, Padraic S., 3M Center, Saint Paul, MN 55133-3427 (US)
(74) Representative: Vossius & Partner
(86) International application number: PCT/US2004/023472
(87) International publication number: WO 2005/013308

(56) References cited:
- EP-A- 1 054 271
- US-A- 5 853 446
- US-B1- 6 544 090
- PATENT ABSTRACTS OF JAPAN vol. 2000, no. 07, 29 September 2000 (2000-09-29) -& JP 2000 094329 A (DAINIPPON PRINTING CO LTD), 4 April 2000 (2000-04-04)
- PATENT ABSTRACTS OF JAPAN vol. 2002, no. 06, 4 June 2002 (2002-06-04) & JP 2002 046249 A (TOPPAN PRINTING CO LTD), 12 February 2002 (2002-02-12)

## Description

### FIELD

This invention relates to a forming technology. More particularly, the invention relates to a master mold for producing a mold of a fine structure, and a method of producing the master mold. The fine structure is typically ribs of a back plate of a plasma display panel.

### BACKGROUND

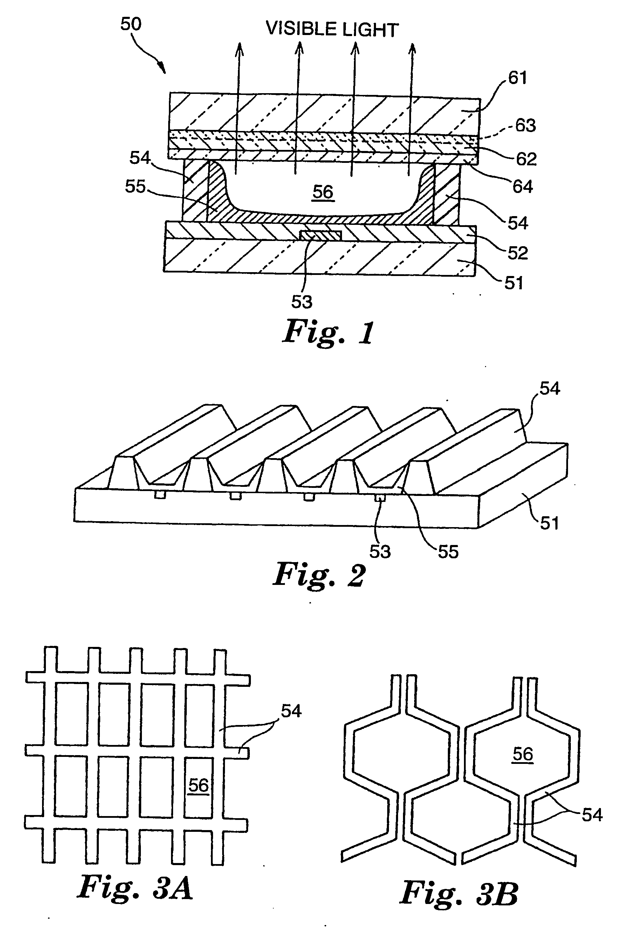

As is well known, a plasma display panel (PDP) has its features in that it is thin and can display a large display screen. Therefore, the use of the PDP for business purposes and recently, for home use as a wall-hung television, has been started. The PDP generally contains a large number of fine discharge display cells. As schematically shown in Fig. 1, each discharge display cell 56 is encompassed and defined by a pair of glass substrates spaced apart from each other, that is, a front surface glass substrate 61 and a back surface glass substrate 51, and ribs (also called "barrier ribs", "partitions" or "barrier walls") 54 having a fine structure and arranged into a predetermined shape between the glass substrates. The front surface glass substrate 61 is equipped thereon with a transparent display electrode 63 consisting of a scanning electrode and a retaining electrode, a transparent dielectric layer 62 and a transparent protective layer 64. The back surface glass substrate 51 is equipped thereon with an address electrode 53 and a dielectric layer 52. Each discharge display cell 56 has on its inner wall a phosphor layer 55, contains a rare gas (Ne-Xe gas, for example) sealed therein, and can cause spontaneous light emission display due to plasma discharge between the electrodes described above.

The ribs 54 are generally composed of a fine structure of ceramics. Generally, the ribs 54 are arranged in advance with the address electrodes 53 on the back surface glass substrate 51 and constitute a PDP back surface plate as schematically shown in Fig. 2. Since shape accuracy and dimensional accuracy of the ribs greatly affect PDP performance, the ribs 54 are formed into various patterns. The ribs 54 typically have a stripe rib pattern 54 shown in Fig. 2. Each discharge display cell 56, too, has a stripe pattern. Another example is a matrix (grid-like) rib pattern 54 shown in Fig. 3(A) or a delta (meander) rib pattern 54 shown in Fig. 3(B). In the case of these rib patterns, each discharge display cell 56 has a form divided into a small zone by the rib patterns 54, and improvement in display performance is expected.

To produce the PDP ribs, a flexible mold is used in some cases. Generally, the flexible mold is duplicated from a master mold (called also "master tool") prepared in advance but is not produced directly from raw materials through a mechanical processing such as grinding. A roll intaglio having a plate surface corresponding to the shape of PDP ribs is used for the master mold, for example (JP 8-273537 and JP 8-273538). To produce the roll intaglio and other master molds, it has been customary to employ a method that forms fine projections (or fine holes corresponding to cells) on a surface of a metal substrate by electric, mechanical and/or physical processing such as end mill, discharge processing, ultrasonic grinding, and so forth. In the case of large-scale PDP such as of a 42-inch class, however, the number of its discharge display cells is as great as 2 to 3 millions. Therefore, when the master mold for producing a mold is produced by the processing method described above, an extremely long time is necessary, a production cost rises and a production condition must be carefully controlled so as to obtain high dimensional accuracy.

To solve the problems of the processing method described above, a method has been proposed that collectively forms projections corresponding to the ribs through photolithography. For example, a master mold of an intaglio for transferring partitions has already been proposed (JP 2000-11865). In this reference, a light transmitting substrate having on its surface a predetermined pattern of a shading material, and a photosensitive material layer on the pattern is first prepared. Exposure is made from the back of the substrate and development is then made to form projections of a desired pattern on the substrate. According to this method, the cells need not be formed one by one, and the production process can be shortened. However, there remains the problem that durability of the master mold is low. Because the projections of the master mold are formed of the photosensitive material (photosensitive material containing photopolymerizable compound or dry film resist), chemical and mechanical durability is low and the master mold cannot be used repeatedly without involving the problems of deformation, breakage, and so forth.

In the PDP ribs, the rib structure includes the straight rib pattern and the grid-like pattern as described above. In the case of the grid-like rib pattern having a large surface area and a complicated shape, high dimensional accuracy cannot be acquired easily and a careful attention is required during the production of the master mold. Because the ribs are arranged parallel to one another in the case of the straight rib pattern, the production of the master mold is relatively easy. Document JP 2000 94 329 relates to a master mold and a method of manufacturing it, whereby the master mold comprises a support layer comprised of copper or glass and a fine structure pattern supported by said support layer; wherein the material of the fine structure pattern acrylic resin or graphite.

The invention aims at solving the problems of the master mold for producing a mold according to the prior art described above.

### SUMMARY OF THE INVENTION

The invention provides a master mold for duplicating a fine structure that is useful for producing a mold of PDP ribs or other fine structures such as microfluidic articles. The master mold utilizes a less complicated process and thus can shorten the production process. The master mold can produce fine structure patterns such as projections from a material excellent in durability.

According to the invention, there is provided a master mold of claim 1 (for duplicating a fine structure to be used for producing a mold of a fine structure), comprising a pattern support layer and a fine structure pattern (having a predetermined shape and a predetermined size and supported by the pattern support layer), wherein the pattern support layer is formed of a first material having a relatively low grinding speed (and a flat surface in a pattern non-support region), and the fine structure pattern is (formed by the steps of forming on the pattern support layer) a layer of a second material having a higher grinding speed than the material of the pattern support layer. The fine structure pattern is preferably formed by selectively (e.g. grinding or etching) removing the layer of the second material in conformity with the fine structure pattern.

The low grinding speed material is preferably metal material. The higher grinding speed material is a glass or ceramic material.

In an embodiment, the invention describes a master mold comprising a support layer comprised of a low grinding speed (e.g. metal) material and a fine structure pattern comprised of a high or grinding speed (glass or ceramic) material formed on said support layer, wherein said fine structure pattern comprises ribs having a rib height of 150 to 300 µm, a rib pitch of 150 to 800 µm, and a rib width of 50 to 80 µm.

According to another aspect of the invention, there is provided a method of producing a master mold of claim 7 (for duplicating a fine structure to be used for producing a mold of a fine structure, the master mold comprising a pattern support layer and a fine structure pattern having a predetermined shape and a predetermined size and supported by the pattern support layer), the method comprising the steps of forming the pattern support layer from a first material having a relatively low grinding speed; depositing a layer of a second glass or ceramic material having a higher grinding speed than the material of the pattern support layer on the pattern support layer to form a composite material layer; forming a (e.g. grinding-resistant or etching-resistant) mask having the same planar pattern as that of the fine structure pattern on the composite material layer; removing the composite material layer (e.g. by a sand blast method or a chemical etch method) in the presence of the mask to selectively remove the layer of the second material and to expose a flat surface of the pattern support layer as a foundation; and peeling the mask from the layer of the second material.

### BRIEF DESCRIPTION OF THE DRAWINGS

Fig. 1 is a sectional view showing schematically an example of PDP according to the prior art.
Fig. 2 is a perspective view showing a PDP back plate used in the PDP shown in Fig. 1.
Fig. 3A-3B is a plan view schematically showing a shape of ribs contained in the PDP back plate.
Fig. 4 is a perspective view of a master mold for duplicating a fine structure according to an embodiment of the invention.
Fig. 5 is a sectional view of the master mold for duplicating a fine structure taken along a line V - V in Fig. 4.
Fig. 6A-6F is a sectional view showing step-wise a production method of a master mold for duplicating a fine structure according to the invention.
Fig. 7A-7C is a sectional view showing step-wise a production method of a flexible mold by use of the master mold for duplicating a fine structure according to the invention.
Fig. 8 is a perspective view of the flexible mold produced by the production method shown in Fig. 7.
Fig. 9A-9C is a sectional view showing step-wise a production method of a PDP back plated by use of the flexible mold produced by the production method shown in Fig. 7.
Fig. 10 is a scaled drawing of an electron micrograph showing a sectional condition of a fine structure of the flexible mold obtained by use of the master mold for producing grid-like ribs produced in Example 1.
Fig. 11 is a scaled drawing of an electron micrograph showing a sectional condition of a fine structure of the flexible mold obtained by use of the master mold for producing grid-like ribs produced in Example 2.
Fig. 12 is a scaled drawing of an electron micrograph showing a sectional condition of a fine structure of the flexible mold obtained by use of the master mold for producing grid-like ribs produced in Comparative Example 1.

### DETAILED DESCRIPTION OF THE PREFERRED EMBODIMENTS

The master mold for duplicating the fine structure and its production method according to the invention can be carried out advantageously in various embodiments. Hereinafter, the embodiments of the invention will be explained about the production of PDP ribs as a typical example of the fine structure, but the invention is not of course limited to the production of the PDP ribs.

The invention provides first a master mold of claim 1 for duplicating a fine structure, to be used for producing a mold of a fine structure, comprising a pattern support layer and a fine structure pattern having a predetermined shape and a predetermined size, and supported by the pattern support layer. Here, the term "fine structure" means various articles having on their surface various fine structures (concave-convex structures having various patterns), and typically represents ribs of a plasma display panel (PDP) back plate. The PDP ribs include a straight rib pattern and a grid-like pattern as already explained, but the invention can be suitably applied to non-straight rib patterns such as the grid-like pattern, in particular.

The master mold for duplicating the fine structure according to the invention as in claim 1 comprises :
(1) a pattern support layer; and
(2) a fine structure pattern supported by the pattern support layer.

The fine structure pattern has a predetermined shape and a predetermined size as explained above. The fine structure pattern corresponds to a straight rib pattern of the PDP ribs or the grid-like pattern and hence, includes the straight projection pattern generally comprising a plurality of ridge-like projections arranged substantially parallel with predetermined gaps among them and the grid-like projection pattern comprising a plurality of ridge-like projections arranged substantially parallel with predetermined gaps among them while intersecting one another.

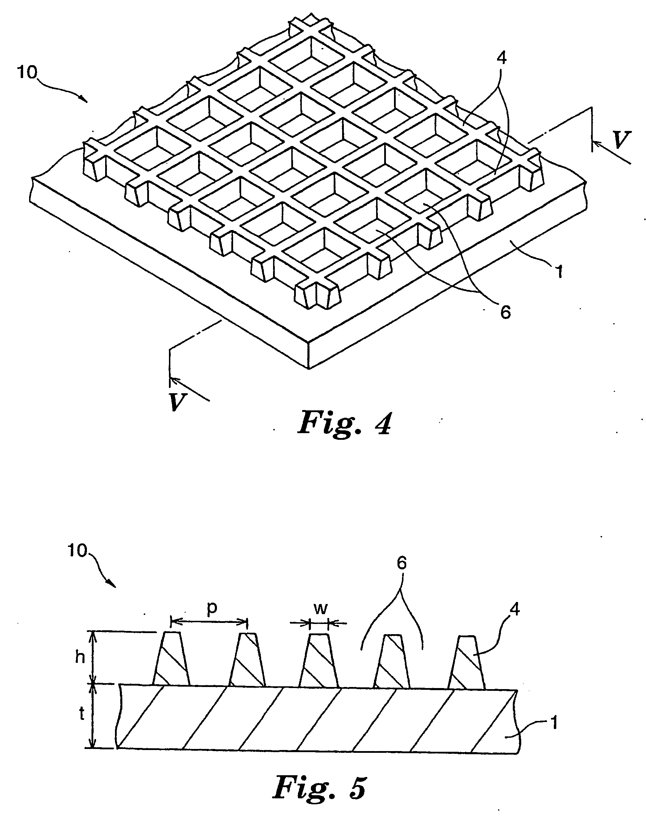

Fig. 4 is a partial perspective view schematically showing a master mold for duplicating a fine structure according to a preferred embodiment of the invention. Fig. 5 is a sectional view taken along a line V - V of Fig. 4. As can be understood from these drawings, the master mold 10 for duplicating the fine structure is not designed for the production of the straight pattern back surface glass substrate 51 having a plurality of ribs 54 arranged substantially parallel to one another as shown in Fig. 2 but for the production of a back surface glass substrate in which a plurality of ribs 54 is arranged with predetermined gaps among them while intersecting one another as shown in Fig. 3 (A), that is, the grid-like pattern, wherein the ribs 54 define the discharge display cells 56. The master mold according to the invention can be used particularly advantageously for duplicating a mold for producing a back surface glass substrate having such a grid-like rib pattern.

As shown in the drawings, the master mold 10 according to the invention has a pattern support layer 1. The pattern support layer 1 supports a fine structure pattern 4 having a predetermined shape and a predetermined size. The fine structure pattern 4 is a grid-like projection pattern comprising a plurality of projections 4 arranged substantially parallel while intersecting one another with predetermined gaps among them. Because the master mold 10 has on its surface the grid-like pattern projections 4 and open portions 6 defined by the projections 4, the master mold 10 can be advantageously used for forming the grid-like PDP ribs, though it can of course be applied to the production of other fine structures (e.g. microfluidic articles). The master mold 10 may have an additional layer or layers, or an arbitrary processing or machining may be applied to each layer constituting the master mold, whenever necessary.

In the master mold 10 according to the invention, the fine structure pattern 4 is formed by the steps of forming a layer of a material (hereinafter called "second material") having a higher grinding speed than that of a material of the pattern support layer (hereinafter called "first material") on the pattern support layer, and selectively (e.g. grinding or etching) removing the second material layer in conformity with the fine structure pattern. The fine structure pattern can be formed through patterning of glass or ceramics. The materials can be oxides containing elements such as silicon, magnesium, aluminum, phosphorus, zinc, lead, chromium, titanium, etc or other compounds. The materials may be used either individually or in combination of two or more kinds. Suitable glass may be selected from a variety of glass such as oxide type glass, e.g. silicate glass, alumino-silicate glass, borate glass, alumino-borate glass, borosilicate glass, alumino-borosilicate glass and phosphate glass in consideration of water resistance, melting point and thermal expansion coefficient. Among them, lead-containing silicate glass, boron-containing silicate glass, borosilicate glass and phosphate glass are suitable for the formation of the fine structure.

The fine structure pattern is generally used as a single layer, however, if it is desired to further improve the durability and the like, for example, the fine structure pattern may be formed as a composite or laminated structure of two or more layers. Further, an outer surface of the fine structure pattern may be fully coated with a reinforcing coating and the like.

The fine structure pattern 4 can be formed into a desired shape and a desired size by use of various patterning methods (e.g. mechanical removal, chemical removal, i.e. etching. However, the fine structure pattern is preferably formed by use of a sand blast method. In other words, the fine structure pattern is advantageously formed by the steps of forming the layer of the second material having a higher grinding speed than that of the first material of the pattern support layer on the pattern support layer to a predetermined thickness by means such as spraying, enameling or a sol-gel method, and removing selectively (e.g. by means of grinding or etching) the layer of the second material in the presence of a mask (i.e. resistant to grinding or etching). When glass or ceramics is ground by the sand blast method or etched, the height of the fine structure pattern can be controlled highly precisely. Incidentally, the sand blast method and its execution will be explained in the following explanation of the production method of the master mold, too.

Here, the shape of the fine structure pattern 4 and its size will be explained. The shape of the fine structure pattern is the straight projection pattern or the grid-like projection pattern as described above. The sectional shape of these projection patterns is not particularly limited but the sectional shape such as a rectangle or a trapezoid is suitable. When the PDP ribs are formed, the fine structure pattern 4 has a sectional shape as shown in Fig. 5, for example, and moreover its aspect ratio is preferably great.

The size of the fine structure pattern 4 can be changed in a broad range. The height, pitch and width of the fine structure pattern 4 can be changed in a broad range in accordance with the pattern of the intended PDP ribs (straight pattern or grid-like pattern). In the case of the master mold 10 for duplicating the grid-like PDP ribs shown in Figs. 4 and 5, the height h of the fine structure pattern 4 (corresponding to the rib height) is generally about 50 to about 500 µm and preferably within the range of about 150 to 300 µm. The pitch p of the fine structure pattern 4 is generally within the range of about 100 to about 1,000 µm and preferably within the range of about 150 to 800 µm. The width w of the fine structure pattern 4, that may be mutually different between the upper surface and the lower surface, is generally within the range of about 10 to about 100 µm and preferably within the range of about 50 to about 80 µm.

In the mold 10 for duplicating the fine structure according to the invention, the fine structure pattern 4 is supported through the pattern support layer 1. In other words, a substrate of the fine structure pattern 4 is unitarily bonded to one of the surfaces of the pattern support layer 1. The pattern support layer 1 may be formed of any material having a relatively low grinding speed lest the surface of the pattern support layer is ground during the formation of the fine structure pattern and an undesired surface coarseness is created. A suitable material for forming the pattern support layer 1 is preferably a metal material. Examples of such metal materials include magnesium, aluminum, zinc, copper, lead, nickel, chromium, iron, titanium, tungsten and their alloys, though they are not restrictive in any way. The grinding speed of such metals is generally about 1/10 of the grinding speed or glass or ceramic.

Preferably, the surface of the pattern support layer 1 does not at all have surface coarseness but has a substantially flat surface in a pattern non-support region 6. When the fine structure finally obtained is the PDP ribs, for example, the pattern non-support region 6 defines the discharge display cell defined by the ribs. When the surface of the pattern support layer 1 is flat, flat regions can be formed at the cell bottom portions of the resulting PDP ribs and performance of PDP can be eventually improved.

Further, the thickness t of the pattern support layer 1 can be changed in a broad range but is generally within the range of about 0.5 to 100 mm and preferably within the range of about 5 to about 50 mm. When the thickness of the pattern support layer 1 is below 0.5 mm, the fine structure pattern 4 cannot be supported stably and moreover, handling property of the master mold 10 drops. When the thickness of the pattern support layer 1 exceeds 100 mm, on the contrary, handling property of the master mold 10 drops due also to the increase of the weight. The pattern support layer 1 is generally used in the form of a single layer or a single sheet but may be used in the form of a composite or laminate structure of two or more layers or sheets.

The invention provides also a production method of a master mold for duplicating a fine structure, to be used for producing a mold of the fine structure, including a pattern support layer and a fine structure pattern having a predetermined shape and a predetermined size and supported by the pattern support layer. This production method comprises the following steps:
(1) Formation step of pattern support layer:
   A pattern support layer is formed from a first material having a relatively low grinding speed.
(2) Formation step of composite material layer:
   A layer of a second glass or ceramic material having a grinding speed higher than that of the material of the pattern support layer is formed on the pattern support layer to form a composite material layer.
(3) Formation step of mask:
   A grinding-resistant mask having the same planar pattern as the planar pattern of the fine structure pattern is formed on the composite material layer.
(4) Removal of second material (e.g. Sand blast step):
   The composite material layer is ground in accordance with a sand blast method in the presence of the grinding-resistant mask to selectively remove the layer of the second material and to expose the flat surface of the pattern support layer as the underlying layer.
(5) Mask peeling step:
   The (e.g. grinding-resistant) mask used is peeled from the layer of the second material as its lower layer. Incidentally, the method of the invention may be conducted while the sequence of the steps described above is changed.

An alternate production method incorporates all the same steps as just described above, except that the removal of the second material comprises a chemical etching method in place of the sand blast method. In this alternative production method, the composite material layer is etched in accordance with a chemical etching method in the presence of the etching-resistant mask to selectively remove the layer of the second material and to expose the flat surface of the pattern support layer as the underlying layer.

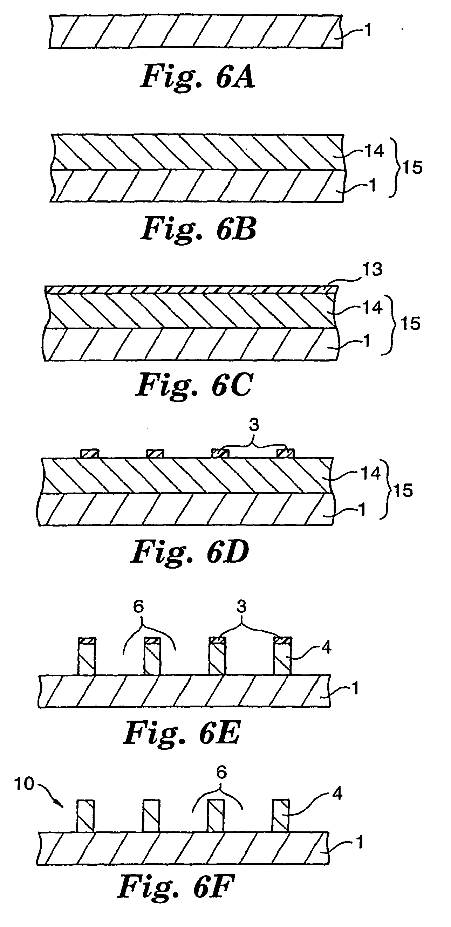

The production method of the master mold for duplicating the fine structure according to the invention can be advantageously executed in various forms. Hereinafter, preferred forms will be explained with reference to Fig. 6.

### (1) Formation step of pattern support layer:

The pattern support layer 1 having a predetermined thickness is formed from the first material as shown in Fig. 6(A). The first material is preferably a metal material having a relatively low grinding speed, and examples include magnesium, aluminum, zinc, copper, lead, nickel, chromium, iron, titanium, tungsten and their alloys as described above. Cleansing treatment may be applied to the surface of the pattern support layer 1, and primer treatment may also be applied to improve adhesion strength of the fine structure pattern to the pattern support layer 1. The thickness of the pattern support layer 1 is generally within the range of about 0.5 to about 100 mm.

### (2) Formation step of composite material layer:

A layer 14 of a second material having a grinding speed higher than that of the material of the pattern support layer 1 is bonded onto the pattern support layer 1 prepared in the preceding step as shown in Fig. 6(B). The second material used for forming the layer 14 is a fine structure pattern formation material. Therefore, this layer can be called a "pattern formation layer 14". The second material suitable for forming the pattern formation layer 14 is glass or ceramic as described above. These materials can be bonded to and united with the pattern support layer 1 by employing various methods. Suitable bonding methods include spraying such as plasma spraying, enameling and a sol-gel method. The optimum method can be selected from them in consideration of the respective advantages. The spraying method has the advantages that it can form a film at a low temperature, is a dry process and can form a thick film. Enameling has the advantage that it can form a compact and thick film. The sol-gel method has the advantages that it can form a film at a relatively low temperature and a compact film.

The bonding method will be explained further concretely. The plasma spraying method is carried out by use of a plasma spraying apparatus equipped with a plasma-spraying gun, a radio frequency starter, a power source, a cooling device, and so forth. The spraying phenomenon comprises a series of process steps such that powder or particles (spraying powder particles) of the second material for the pattern formation layer are supplied into plasma jet, are accelerated while being melted, fly and impinge against the pattern support layer, are wetted with the pattern support layer and deprived of heat and are solidified to form a film. The spraying powder particles can be used in various particle diameters but generally have particle diameters within the range of about 10 to about 80 µm. The flying speed of the spraying powder particles is generally within the range of about 100 to about 300 m/sec. It is preferred to conduct pre-treatment (for example, washing, sand blast treatment, etc) of the surface of the pattern support layer before plasma spraying to improve the bonding strength of the spraying powder particles to the pattern support layer.

Enameling can be carried out in the same way as the formation of a variety of enamels (glass or ceramic coating) that has widely been executed in household goods and building materials. For example, powder (frit) of the second material for forming the pattern formation layer is coated to the surface of the pattern support layer and is re-melted at an elevated temperature. In consequence, the pattern formation layer firmly bonded to the pattern support layer can be formed.

According to the sol-gel method, the starting material of the second material for forming the pattern formation layer is applied to the surface of the pattern support layer in accordance with a dip coating method or a spin coating method, and is further baked at a high temperature.

A dry process conventionally used in the formation of thin films such as chemical vapor deposition (CVD), sputtering, vacuum deposition, etc, may be employed besides the bonding methods described above, whenever necessary.

The thickness of the pattern formation layer 14 formed of the various materials as described above can be changed in a broad range in accordance with the height of the projection pattern corresponding to the desired ribs, but it is generally within the range of about 50 to about 500 µm. A composite material layer of a two-layered structure including the pattern support layer 1 and the pattern formation layer 14 can be thus obtained.

### (3) Mask formation step:

First, a layer of a (grinding-resistant or etching-resistant) mask formation material (mask formation layer) 13 is formed to a predetermined thickness on the composite material layer 15 formed in the preceding step as shown in Fig. 6(C). The mask formation material used hereby is not particularly limited so long as it can be patterned to a desired shape in accordance with photolithography and has sufficient grinding or etching resistance in the subsequent (e.g. sand blast) selective removal step, and an arbitrary material can be used. For example, organic resin materials that are generally used as a resist such as a novolak resin and a urethane resin can be used. When the resist material is used, for example, a solution of the resist is applied to a predetermined thickness onto the composite material layer 15 and is cured and in this way, the mask formation layer 13 can be easily formed. It is also possible to bond a dry film resist to the composite material layer 15 to form the mask formation layer 13 instead of applying the resist solution. The thickness of the mask formation layer 13 is not particularly limited, and is generally within the range of about 25 to about 100 µm.

After the mask formation layer 13 is formed on the composite material layer 15 in the manner described above, the mask formation layer 13 is patterned in accordance with photolithography. This is to form the mask 3 (resistant to grinding or etching) having the planar pattern that is the same as the intended fine structure pattern as shown in Fig. 6(D), and the process can be executed by use of customary photolithography. In other words, pattern exposure is generally applied to the mask formation layer 13 in conformity with the intended fine structure pattern and unnecessary portions are subsequently dissolved and removed with a developing solution to give the intended mask 3. Incidentally, an arbitrary light source such as ultraviolet rays, electron beams, excimer laser, or the like, can be used for the pattern exposure in accordance with the properties of the resist used.

### (4) Sand blast step:

After the mask 3 is formed, the composite material layer 15 of the underlying layer is ground or etched in accordance with for example the sand blast method in the presence of the mask 3. The composite material layer 15 includes the pattern formation layer 1 and the pattern formation layer 14 that have mutually different grinding or etching resistance. Therefore, the grinding or etching step is stopped in a stage at which the surface of the pattern support layer 1 is exposed as shown in Fig. 6(E), forming thereby the fine structure pattern 4. The fine structure pattern 4 does not contain a residue like a skirt of a mountain between the patterns but has a sharp profile, and its aspect ratio is great, too. The flat surface of the pattern support layer 1 as the underlying layer is exposed in the space 6 between the fine structure patterns 4 (corresponding to a discharge display cell).

The sand blast method will be explained further concretely: This method is also called a "dry blast method" or "mechanical etch method" and can be executed under various conditions in accordance with the detail of the intended fine structure pattern (projection patter). Generally, the fine particles (abrasives) of the grinding or etching material are projected from a nozzle having a very small diameter to the masked pattern formation layer, and the exposed surface of the pattern formation layer is removed in such a fashion as to cut off the exposed surface. Organic fine particles of alumina, zirconia, carbonrundum and silica or steel grids can be used as the abrasives. These abrasives can be used in various particle diameters, but a range of about #100 to about #1,000 is ordinary.

### (5) Mask peeling step:

Finally, the used mask is peeled from the surface of the fine structure pattern 4 as the underlying layer. A customary peeling solution can be used to peel the mask 3. As a result, the master mold 10 for duplicating the fine structure explained in detail with preference to Figs. 4 and 5 can be obtained as shown in Fig. 6(F).

As described above, the master mold for duplicating the fine structure according to the invention can be advantageously used for the production of the PDP ribs and other fine structures. This master mold can be used particularly advantageously for the production of the PDP ribs as the grid-like rib pattern consisting of a plurality of ridge-like projections that are arranged substantially parallel while intersecting one another with predetermined gaps among them. Incidentally, the PDP and its rib construction have already been explained with reference to Figs. 1 and 2, and the detailed explanation is hereby omitted.

The master mold for duplicating the fine structure according to the invention has on its surface the fine structure pattern having the shape and the size corresponding to those of the ribs. Therefore, a flexible mold is first produced by use of the master mold as a prototype, and the intended fine structure (PDP ribs) can be duplicated by use of the flexible mold. In the invention, both flexible mold and PDP ribs can be duplicated advantageously by use of a transfer method. When the master mold is used, it is possible to produce the flexible mold and to duplicate the PDP ribs easily and with high precision.

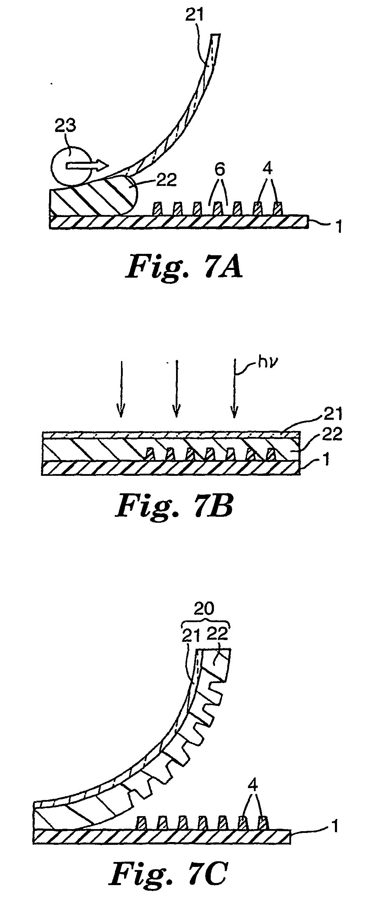

The flexible mold can be produced in accordance with various technologies by using the master mold for duplicating the fine structure according to the invention. For example, the flexible mold for producing the PDP ribs having the grid-like rib pattern shown in Fig. 3 (A) can be advantageously produced by use of the master mold 10 shown in Figs. 4 and 5 in the sequence shown step-wise in Fig. 7.

First, as shown in Fig. 7(A), a master mold 10 of the invention having the shape and the size corresponding to those of the PDP ribs as the production object, a support composed of a plastic film (hereinafter called a "support film") 21 and a laminate roll 23 are prepared. The master mold 10 includes a pattern support layer 1 and a grid-like projection pattern 4 supported by the pattern support layer 1. The grid-like projection pattern 4 is substantially the same as the rib pattern of the PDP back plate. Therefore, each space (recess) 6 defined by adjacent projection patterns 4 operates as a discharge display cell of the PDP. A taper for preventing entrapment of bubbles may be fitted to the upper end part of the projection pattern. Since the master mold having the same shape as that of the final rib form is prepared, end part processing after the production of the ribs becomes unnecessary, and the occurrence of defects due to fragments created by the end part processing can be eliminated. According to this production method, molding materials for forming a shape-imparting layer are all cured, and amounts of residues of the molding materials on the master mold become so small that re-utilization of the master mold can be easily made. The laminate roll 23 is used for pushing the support film 21 to the master mold 10 and is composed of a rubber roll. If necessary, other known customary means may be used in place of the laminate roll. The support film 21 is a polyester film or other transparent plastic film described above.

Next, a predetermined amount of a UV-curable molding material 22 is applied to an end face of the master mold 10 by use of known and customary coating means such as a knife coater or a bar coater (not shown). When a soft and flexible material is used for the support film 21, the molding material 22 keeps adhesion with the support film 21 even when the UV-curable molding material 22 undergoes shrinkage and does not cause dimensional change of 10 ppm or more unless the support film 21 undergoes by itself deformation.

Ageing is preferably carried out in the production environment of the mold before the laminate treatment to remove the dimensional change of the support film due to humidity. Unless this ageing treatment is carried out, variance of the size not permissible in the resulting mold (variance in the order of 300 ppm, for example) is likely to occur in the mold.

Next, the laminate roll 23 is slid on the master mold 10 in the direction indicated by an arrow. As a result of this laminate treatment, the molding material 22 is spread uniformly to a predetermined thickness and fills the gaps of the projection patterns 4. Since the support film 21 pushes the molding material 22, de-foaming is better than that of the coating methods employed generally in the past.

After the laminate treatment was completed, ultraviolet rays (hv) are irradiated to the molding material 22 through the support film 21 as indicated by arrow while the support film 21 is kept laminated on the master mold 10 as shown in Fig. 7(B). Here, when the support film 21 is uniformly formed of a transparent material without containing light scattering elements such as bubbles, the irradiated rays of light can uniformly reach the molding material 22 with hardly any attenuation. As a result, the molding material is efficiently cured and forms a uniform shape-imparting layer 22 bonded to the support film 21. Consequently, the flexible mold comprising the support film 21 and the shape-imparting layer 22 unitarily bonded to each other can be obtained. Incidentally, since the ultraviolet rays having a wavelength of 350 to 450 nm, for example, can be used in this process, there is the merit that a light source generating high heat such as a high-pressure mercury lamp typified by a fusion lamp need not be used. Further, because the support film and the shape-imparting layer do not undergo thermal deformation, there is another merit that pitch control can be made with a high level of accuracy.

Next, as shown in Fig. 7(C), the flexible mold 20 is separated from the master mold 10 while keeping its integrity. The flexible mold 20 according to the invention can be formed relatively easily irrespective of its size by employing suitable known/customary laminate means and coating means. Therefore, the invention can easily produce a large-scale flexible mold without any limitations unlike the production methods of the prior art that use vacuum installation such as a vacuum press-molding machine.

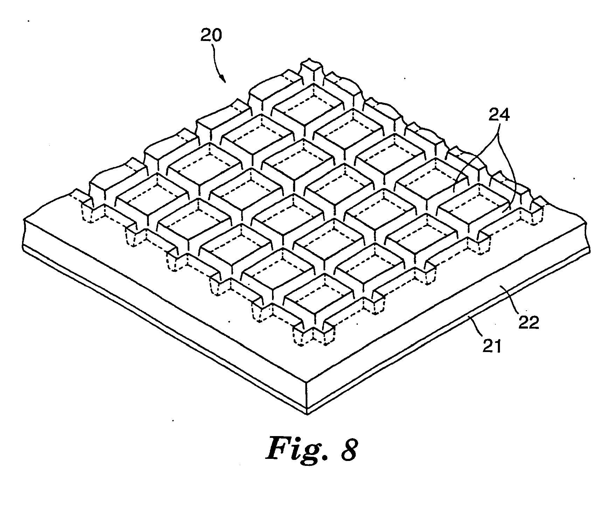

Fig. 8 is a perspective view of the flexible mold 20 produced in the sequence described above. As can be understood from this drawing, the flexible mold 10 can be used for producing a back surface glass substrate having a pattern in which a plurality of ribs 54 is arranged substantially parallel while intersecting one another with gaps among them, that is, the grid-like rib pattern shown in Fig. 3. The flexible mold 20 can be used particularly advantageously for producing a back surface plate having such a grid-like rib pattern because it can be easily executed without inviting the problems such as deformation and breakage when the flexible mold is removed from the master mold for producing a large fine structure having a complicated shape.

The flexible mold 20 has on its surface a groove pattern having a predetermined shape and a predetermined size as shown in the drawing. The groove pattern is a grid-like pattern having a plurality of groove portions 24 arranged substantially parallel while intersecting one another with predetermined gaps among them. The flexible mold 20 can of course be used for producing other fine structures, but can be advantageously used for forming the grid-like PDP ribs because it has the groove portions of the open grid-like pattern on its surface. The flexible mold 20 may have an additional layer or layers, or an arbitrary treatment may be applied to each layer constituting the flexible mold, whenever necessary. Basically, however, the flexible mold 20 includes the support 21 and the shape-imparting layer 22 having the groove portions 24 as shown in the drawing.

The shape-imparting layer 22 is formed of a cured resin that is in turn formed by curing a UV-curable composition by the irradiation of ultraviolet rays. The UV-curable composition used for forming the shape-imparting layer 22 is not particularly limited. For example, a UV-curable composition containing an acryl monomer and/or oligomer as its main component can be advantageously used. The method of forming the shape-imparting layer from the UV-curable composition is useful because an elongated heating furnace is not required for forming the shape-imparting layer and moreover, the cured resin can be acquired within a relatively short time by curing the composition.

Examples of acryl monomers suitable for forming the shape-imparting layer include urethane acrylate, polyether acrylate, polyester acrylate, acrylamide, acrylonitrile, acrylic acid, acrylic acid ester, etc. However, they are not restrictive. Examples of the acryl oligomers suitable for forming the shape-imparting layer include urethane acryalte oligomer, polyether acrylate oligomer, polyester acrylate oligomer, epoxy acrylate oligomer, etc, and these are not restrictive examples. The urethane acrylate and its oligomer, in particular, can provide a soft and strong cured resin layer after curing and has an extremely low curing rate among acrylates as a whole, and can contribute to the improvement of productivity of the mold. When these acryl monomer and oligomer are used, the shape-imparting layer becomes optically transparent. Therefore, the flexible mold having such a shape-imparting layer makes it possible to use a photo-curable molding material when the PDP ribs and other fine structures are produced.

The UV-curable composition may arbitrarily contain a photopolymerization initiator and other additives, whenever necessary. Examples of the photopolymerization initiator include 2-hydroxy- 2-methyl-1-phenylpropane-1-on. The photopolymerization initiator can be used in various amounts in the UV-curable composition, but its amount is preferably about 0.1 to about 10wt% on the basis of the total amount of the acryl monomer and/or oligomer. When the amount of the photo-polymerization initiator is smaller than 0.1wt%, the curing reaction is retarded or curing cannot be made sufficiently. When the amount of the photopolymerization initiator is greater than 10wt%, on the contrary, the non-reacted photopolymerization initiator remains even after completion of the curing step, and problems such as yellowing and deterioration of the resin, and shrinkage of the resin due to evaporation occur. An example of other useful additives is an antistatic agent

The shape-imparting layer 22 can be used at a variety of thickness depending on the constructions of the mold and the PDP. However, the thickness is generally within the range of about 5 to about 1,000 µm, preferably within the range of about 10 to about 800 µm and further preferably within the range of about 50 to about 700 µm. When the thickness of the shape-imparting layer is below 5 µm, the necessary rib height cannot be obtained. In the shape-imparting layer according to the invention, no problem occurs in removing the mold from the master mold even when the thickness of the shape-imparting layer is as great as up to 1,000µm to insure a large rib height. When the thickness of the shape-imparting layer is greater than 1,000 µm, stress becomes great due to curing shrinkage of the UV-curing composition, so that the problems such as warp of the mold and deterioration of dimensional accuracy occur. It is of importance in the mold according to the invention that the completed mold can be easily removed with small force from the master mold even when the depth of the groove pattern is increased in such a fashion as to correspond to the rib height, that is, even when the thickness of the shape-imparting layer is designed to be a large value.

Here, the groove pattern 24 formed on the surface of the shape-imparting layer 22 will be explained. Depth, pitch and width of the groove pattern 24 can be changed in a broad range depending on the pattern of the intended PDP ribs (straight pattern or grid-like pattern) and depending on the thickness of the shape-imparting layer itself. In the case of the mold 20 of the grid-like PDP ribs shown in Fig. 8, the depth of the groove patterns 24 (corresponding to the rib height) is generally within the range of about 50 to about 500 µm and preferably 150 to 300 µm. The pitch of the groove pattern 4 is generally within the range of 100 to about 1,000 µm and preferably within the range of about 150 to 800 µm. The width of the groove pattern 4, that may be different between the upper surface and the lower surface, is generally within the range of about 10 to about 100 µm and preferably within the range of about 50 to about 80 µm. To efficiently produce the PDP ribs with high dimensional accuracy by use of the photo-curable material, the shape-imparting layer 22 is preferably transparent.

Form, material and thickness of the support 21 for supporting the shape-imparting layer 22 are not limited so long as the support 21 has sufficient flexibility and suitable hardness to secure flexibility of the mold. Generally, a flexible film of a plastic material (plastic film) can be advantageously used as the support. The plastic film is preferably transparent, and must have at least sufficient transparency to transmit the ultraviolet rays irradiated for the formation of the shape-imparting layer. When the production of the PDP ribs and other fine structures from photo-curable materials by use of the resulting mold is taken into account, both of the support and the shape-imparting layer are preferably transparent.

Examples of plastic materials suitable for forming the plastic film to execute the invention includes polyethylene terephthalate (PET), polyethylene naphthalate (PEN), stretched polypropylene, polycarbonate and triacetate, though they are in no way restrictive. Among them, the PET film is useful as the support. For example, a polyester film such as Tetolon^{™} film can be used advantageously as the support. These plastic films may be used either as a single-layered film or a composite or laminate film of two or more layers.

The plastic films or other supports described above can be used at a variety of thickness depending on the constructions of the mold and the PDP, but the thickness is generally within the range of about 50 to about 500 µm and preferably within the range of about 100 to about 400 µm. When the thickness of the support is below 50 µm, rigidity of the film becomes so low that crease and breakage are likely to occur. When the thickness of the support exceeds 500 µm, on the contrary, flexibility of the film drops so that handling property drops.

The plastic film is generally obtained by molding a plastic material into a sheet, and is commercially available in the form where it is cut into a sheet or wound into a roll. If necessary, an arbitrary surface treatment may be applied to the plastic film to improve adhesion strength of the shape-imparting layer to the plastic film.

In addition, the flexible mold produced in the manner described above is useful for forming PDP ribs having a grid-like rib pattern. When this flexible mold is used, a large-screen PDP having a rib structure in which ultraviolet rays do not easily leak from the discharge display cells to the outside can be readily produced by merely using a laminate roll in place of vacuum equipment and/or complicated process.

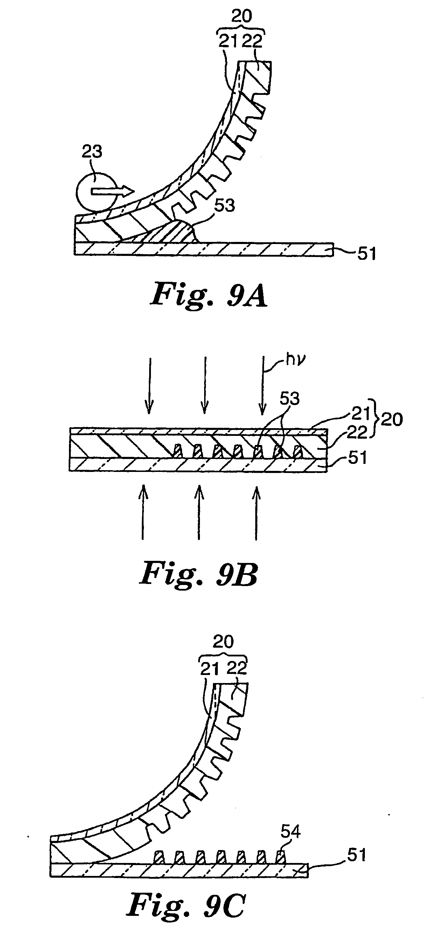

A typical example of PDP rib production by using the flexible forming mold is production of a PDP substrate (back plate) having ribs formed on a flat glass sheet. Next, a method of producing the PDP ribs having the grid-like rib pattern by use of the flexible forming mold 20 of Fig. 8 produced by the method shown in Fig. 7 will be explained step-wise with reference to Fig. 9. Incidentally, a production apparatus shown in Figs. 1 to 3 of Japanese Unexamined Patent Publication (Kokai) No. 2001-191345 can be advantageously used to execute the method of the invention.

First, a glass flat sheet, not shown, on which stripe-like electrodes are arranged in a predetermined pattern, is prepared and is then set to a stool. Next, as shown in Fig. 9(A), the flexible mold 20 of the invention having the groove pattern on its surface is put at a predetermined position of the flat glass sheet 51, and the flat glass sheet 51 and the forming mold 10 are positioned (aligned). Since the forming mold 20 is transparent, its positioning with the electrodes on the flat glass sheet 51 is easy. Hereinafter, detailed explanation will be given. This positioning may be conducted with eye or by use of a sensor such as a CCD camera, for example. In this instance, the groove portions of the forming mold 20 and the gaps between the adjacent electrodes on the flat glass sheet 31 may be brought into conformity by adjusting the temperature and the humidity, whenever necessary. Generally, the forming mold 20 and the flat glass sheet 51 undergo extension and contraction in accordance with the change of the temperature and the humidity, and the extents are mutually different. Therefore, after positioning of the flat glass sheet 51 and the forming mold 20 is completed, control is so made as to keep the temperature and the humidity at that time constant. Such a controlling method is particularly effective for producing a PDP substrate having a large area.

Subsequently, the laminate roll 23 is put at one of the ends of the forming mold 20. The laminate roll 23 is preferably a rubber roll. At this time, one of the ends of the forming mold 20 is preferably fixed onto the flat glass sheet 51. For, the positioning error of the flat glass sheet 51 and the forming mold 20 for which positioning has previously been completed can be prevented.

Next, the other free end of the forming mold 20 is lifted up by use of a holder (not shown) and is moved above the laminate roll 23 to expose the flat glass sheet 51. Tension must not be applied at this time to the forming mold 20 so as to prevent crease in the forming mold 20 and to keep positioning between the forming mold 20 and the flat glass sheet 51. However, other means may be used so long as this positioning can be kept. Because the forming mold 20 has flexibility in this production method, even when the forming mold 20 is turned up as shown in the drawing, the forming mold 20 can correctly return to the original positioning state.

Next, a predetermined amount of a rib precursor 53 necessary for forming the ribs is supplied onto the flat glass sheet 51. A paste hopper having a nozzle, for example, can be used for supplying the rib precursor.

Here, the term "rib precursor" means an arbitrary molding material that can finally form the intended rib molding, and is not particularly limited so long as it can form the rib molding. The precursor may be either heat-curable or photo-curable. The photo-curable rib precursor can be used extremely effectively when combined with the transparent flexible mold. As described above, the flexible mold can suppress non-uniform scatter of light without involving defects such as bubbles and deformation. The molding material can thus be cured uniformly and provides the ribs having stable and excellent quality.

An example of the composition suitable for the rib precursor is a composition basically containing (1) a ceramic component that provides a rib shape such as aluminum oxide, (2) a glass component that fills the gaps among the ceramic components and imparts compactness to the ribs, such as lead glass or phosphate glass, and (3) a binder component for storing and keeping the ceramic component and combining with the ceramic component, and its curing agent or its polymerization initiator. Curing of the binder component is preferably attained through irradiation of light without relying on heating. In such a case, thermal deformation of the flat glass sheet need not be taken into account. Whenever necessary, an oxidation catalyst consisting of an oxide, a salt or a complex of chromium (Cr), manganese (Mn), iron (Fe), cobalt (Co), nickel (Ni), copper (Cu), zinc (Zn), indium (In), tin (Sn), ruthenium (Ru), rhodium (Rh), palladium (Pd), silver (Ag), iridium (Ir), platinum (Pt), gold (Au) or cerium (Ce) is added to this composition to thereby lower the removing temperature of the binder component.

When the production method shown in the drawing is carried out, the rib precursor 53 is not supplied uniformly to the entire portion on the flat glass sheet 31. The rib precursor 53 needs be supplied to the flat glass sheet 31 only in the proximity of the laminate roll 23 as shown in Fig. 9(A). When the laminate roll 23 moves on the mold 20 in the subsequent step, it can uniformly spread the rib precursor 53 on the flat glass sheet 51. In such a case, however, the rib precursor 53 has generally a viscosity of about 20,000 cps (1cps = 1mPa·s) or below, and more preferably about 5,000 cps or below. When the viscosity of the rib precursor is higher than about 20,000 cps, the laminate roll cannot sufficiently spread the rib precursor. In consequence, air is entrapped into the groove portions of the mold and may result in the rib defect. As a matter of fact, when the viscosity of the rib precursor is about 20,000 cps or below, the rib precursor uniformly spreads between the flat glass sheet and the mold when the laminate roll is moved only once from one of the ends to the other end of the flat glass sheet, and can uniformly fill all the groove portions without entrapping air. However, the supplying method of the rib precursor is not limited to the method described above. For example, the rib precursor may well be coated to the entire surface of the flat glass sheet, though this method is not shown in the drawing. In this case, the rib precursor for coating has the same viscosity as described above. When the ribs having the grid-like pattern are formed, in particular, the viscosity is about 20,000 cps or below and preferably about 5,000 cps or below.

Next, a motor (not shown) is driven and the laminate roll 23 is moved at a predetermined speed on the mold 20 as shown in Fig. 9(A). While the laminate roll 23 is moving in this way on the mold 20, a pressure is applied to the mold 20 from one of its ends to the other due to the weight of the laminate roll 23, and the rib precursor 53 spreads between the flat glass sheet 51 and the mold 20 and fills the groove portions of the mold 20, too. In other words, the rib precursor 53 sequentially replaces air of the groove portions and fills the groove portions. At this time, the thickness of the rib precursor can be adjusted to the range of several to dozens of microns when the viscosity of the rib precursor, the diameter of the laminate roll, its weight or its moving speed are suitably adjusted.

According to the production method shown in the drawing, the groove portions of the mold operate also as air channels. Even when the groove portions collect air, air can be efficiently discharged outside the mold and its peripheral portion when the pressure described above is applied. As a result, this production method can prevent the bubbles from remaining even when the rib precursor is charged at the atmospheric pressure. In other words, a reduced pressure need not be applied to charge the rib precursor. Needless to say, however, the bubbles can be removed more easily under the reduced pressure state.

Subsequently, the rib precursor is cured. When the rib precursor 53 spread on the flat glass sheet 51 is of the photo-curable type, as shown in Fig. 9(B), the stacked body of the flat glass sheet 51 and the mold 20 is put into a light irradiation apparatus (not shown), and the rays of light such as the ultraviolet rays are irradiated to the rib precursor 53 through the flat glass sheet 51 and the mold 20 to cure the rib precursor 53. A molding of the rib precursor, that is, the ribs per se, can be obtained in this way.

Finally, while the resulting ribs 54 remain bonded to the flat glass sheet 51, the flat glass sheet 51 and the mold 20 are taken out from the light irradiation apparatus and the forming mold 20 is peeled and removed as shown in Fig. 9(C). Because the mold 10 according to the invention is excellent in the handling property, too, the mold 10 can be easily peeled and removed with limited force without breaking the ribs 54 bonded to the flat glass sheet 31. Needless to say, a large-scale apparatus is not necessary for this peeling/removing operation.

The master mold for duplicating a fine structure and production process thereof according to the present invention was described above particularly with reference to the production of PDP ribs. However, as will be understood from the above descriptions, the present invention can be advantageously used in the production of other fine structures.

As another example to which the present invention can be applied, there is a liquid transporting member having a fine structure pattern on a surface thereof. The fine structure pattern can act as a microchannel for directionally flowing a liquid. For example, the liquid transporting member can be advantageously used in the form of articles disclosed in International Patent Publication (Kohyo) No. 2002-535039 and WO 99/09923. In addition, the liquid transporting member of the present invention is useful as an outer wall of buildings, for example. In these and other applications, a surface of the liquid transporting member is preferably coated with a photocatalyst such as titanium oxide. Using the photocatalyst coating, it becomes possible to further accelerate the transportation of liquid, in addition to remarkable effects such as prevention of contamination and removal of contaminants.

Yet another example to which the present invention can be applied, is as a microfluidic article, which is useful in detecting and enumerating microorganisms, and may be formed from a plurality of microcompartments in a culture device. A plurality of these microcompartments or microstructured assemblies can also act as a biological or chemical assay device. For example, the fine structured pattern can be advantageously used in the form of articles disclosed in U.S. Patent No. 6,696,286.

### Examples

The invention will be explained concretely with reference to the following examples. Incidentally, those skilled in the art could easily understand that the invention is not limited to these examples.

### Example 1

### Production of master mold for duplicating PDP ribs:

An aluminum sheet having a thickness of 5 mm, a width of 100 mm and a length of 100 m was prepared to use it as a pattern support layer of a master mold. A thin film of a Ni-Al alloy was deposited to a film thickness of 50 µm to one of the surfaces of the aluminum sheet. Next, a film of a ceramic layer was plasma sprayed to a thickness of 200 µm on the Ni-Al alloy on the aluminum sheet so prepared. The ceramic layer was to operate as a pattern formation layer for forming a projection pattern corresponding a grid-like rib pattern, and ceramic used hereby was MgO-SiO₂.

Next, a mask having sand blast resistance for patterning the MgO-SiO₂ layer was formed on the MgO-SiO₂ layer of the resulting stacked aluminum sheet in the following way.

First, a dry film resist ("Liston^{™} SA100", trade name, product of DuPont MRC Dry Film Co.) was bonded to the MgO-SiO₂ layer of the stacked aluminum sheet Next, uniform ultraviolet rays were irradiated from above to the dry film resist to form a latent image corresponding to the desired grid-like rib pattern. To form the latent image, a ultrahigh pressure mercury lamp, a product of Ushio Denki K. K., was used. The irradiation dose of the ultraviolet rays was 150 to 200 mJ/cm². After completion of pattern exposure, the exposed dry film resist was developed by use of an aqueous sodium carbonate solution, was washed with water and was then dried. There was thus obtained a mask which had rectangular open portions formed regularly and in which the MgO-SiO₂ layer was exposed at each open portion. When measured, the open portion of the resulting mask had a rectangle of a length of 680 µm and a width of 230 µm. The open portions regularly repeated in a cycle of a length of 730 µm and a width of 280 µm, and the number was 108 in the longitudinal direction and 284 in the transverse direction. In other words, the total number of the rectangular open portions in the mask was 30,672. Incidentally, these open portions corresponded to discharge display cells of the PDP rib.

After the sand blast-resistant mask was formed in the manner described above, the MgO-SiO₂ layer as the underlying layer was ground by use of the sand blast method and only the exposed portions were selectively removed. The sand blast condition used was as follows.
abrasives: WA#600
pressure: 0.35 MPa

Projection of the abrasives was continued until the Ni-Al alloy surface of the underlying layer of the MgO-SiO₂ was uniformly exposed at the open portions of the mask.

After grinding and removal of the layer was completed, the unnecessary mask was peeled and removed by use of an aqueous sodium hydroxide solution, and washing with water was conducted, followed then by drying. There was thus obtained a master mold for duplicating PDP ribs in which the MgO-SiO₂ layer was completely ground and removed at the open portions of the mask, and the MgO-SiO₂ layer remained as a sharp projection pattern at portions corresponding to the ribs.

### Production of flexible mold:

To observe the condition of the fine structure of the master mold described above, the grid-like pattern of the master mold was transferred to a UV-curable composition and a flexible mold was produced.

The UV-curable composition was applied to the fine structure surface of the master mold so produced. Thereafter, a PET film ("HPE188", a trade name, product of Teijin Co.) having a thickness of 188 8 µm was laminated in such a manner as to cover the surface of the master mold. When the PET film was carefully pushed by use of a laminate roll, the UV-curable composition was completely charged into the recesses of the master mold and entrapment of air was not observed.

Under this condition, ultraviolet rays having a wavelength of 300 to 400 nm (peak wavelength: 352 nm) were irradiated from a fluorescent lamp, a product of Mitsubishi Denki-Oslam Co., to the UV-curable composition for 60 seconds through the PET film. The irradiation dose of the ultraviolet rays was 200 to 300 mJ/cm². The UV-curable composition was cured and a shape-imparting layer was obtained. Subsequently, when the PET film and the shape-imparting layer were removed from the master mold, a flexible mold having a large number of groove portions having a shape and a size corresponding to those of the projection pattern of the master mold was obtained.

The condition of the fine structure of the surface of the resulting flexible mold was observed through a scanning electron microscope (magnification 70X). It was observed that a grid-like groove pattern having longitudinal grooves having a pitch of 280 µm and a width of 50 µm at the upper end and transverse grooves having a pitch of 730 µm and a width of 50 µm at the upper end corresponding to the grid-like projection pattern of the master mold was formed on the PET film.

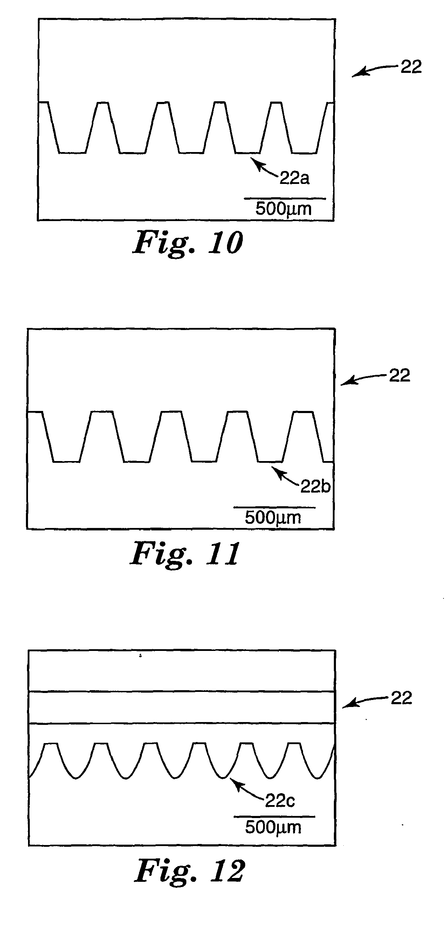

Next, the same flexible mold was cut vertically in the longitudinal direction, and the cut surface was observed through the scanning electron microscope (magnification 70X). It was confirmed that a mold having a fine structure suitable for duplicating the PDP ribs as shown in Fig. 10 (electron micrograph) was formed. The surface region of the shape-imparting layer 22 (corresponding to the bottom surface of the cells encompassed by the ribs) 22a was substantially flat, and its width was about 100 µm.

### Example 2

### Production of master mold for duplicating PDP rib:

A stainless steel sheet having a thickness of 5 nun, a width of 400 mm and a length of 300 mm was prepared to use it as a pattern support layer of a master mold. A mean surface thickness Ra of this stainless steel sheet was about 1.6 µm. Next, a glass layer was formed by enameling to a thickness of 200 µm on the stainless steel sheet so prepared. This glass layer was to operate as a pattern formation layer for forming a projection pattern corresponding to the grid-like rib pattern. Glass hereby used was low melting glass (PbO-B₂O₃ -SiO₂ type glass, DTA transition point: 451°C, thermal expansion coefficient: 7.2 ppm/°C).

Next, a mask having sand blast resistance for patterning the low melting glass layer was formed on the low melting glass layer of the resulting stacked sheet in the following way.

First, a dry film resist ("Liston^{™} SA100", trade name, product of DuPont MRC Dry Film Co.) was bonded to the low melting glass layer of the stacked sheet. Next, uniform ultraviolet rays were irradiated from above to the dry film resist to form a latent image corresponding to the desired grid-like rib pattern. To form the latent image, a ultrahigh pressure mercury lamp, a product of Ushio Denki K. K., was used. The irradiation dose of the ultraviolet rays was 150 to 200 mJ/cm². After completion of pattern exposure, the exposed dry film resist was developed by use of an aqueous sodium carbonate solution, was washed with water and was then dried. There was thus obtained a mask which had rectangular open portions formed regularly and in which the low melting glass layer was exposed at each open portion. When measured, the open portion of the resulting mask had a rectangle of a length of 700 µm and a width of 200 µm. The open portions regularly repeated in a cycle of a length of 800 µm and a width of 270 µm, and the number was 180 in the longitudinal direction and 840 in the transverse direction. In other words, the total number of the rectangular open portions in the mask was 151,200. Incidentally, these open portions corresponded to discharge display cells of the PDP rib.

After the sand blast-resistant mask was formed in the manner described above, the low melting glass layer as the underlying layer was ground by use of the sand blast method and only the exposed portions were selectively removed. The sand blast condition used hereby was the same as that of Example 1. Projection of the abrasives was continued until the stainless steel sheet of the underlying layer of the low melting glass layer was uniformly exposed at the open portions of the mask.

After grinding and removal of the low melting glass layer was completed, the unnecessary mask was peeled and removed by use of an aqueous sodium hydroxide solution, and washing with water was conducted, followed then by drying. There was thus obtained a master mold for duplicating PDP ribs in which the low melting glass layer was completely ground and removed at the open portions of the mask, and the low melting glass layer remained as a sharp projection pattern at portions corresponding to the ribs. Production of flexible mold:

To observe the condition of the fine structure of the master mold described above, the grid-like pattern of the master mold was transferred to a UV-curable composition and a flexible mold was produced. The procedure for producing the flexible mold was the same as that of Example 1. When the PET film and the shape-imparting layer were peeled from the master mold, there was obtained a flexible mold having a large number of groove portions having a shape and a size corresponding to those of the projection pattern of the master mold.

The condition of the fine structure of the surface of the resulting flexible mold was observed through a scanning electron microscope (magnification 100X). It was observed that a grid-like groove pattern having longitudinal grooves having a pitch of 270 µm and a width of 70 µm at the upper end and transverse grooves having a pitch of 800 µm and a width of 100 µm at the upper end corresponding to the grid-like projection pattern of the master mold was formed on the PET film.

Next, the same flexible mold was cut vertically in the longitudinal direction, and the cut surface was observed through the scanning electron microscope (magnification 100X). It was confirmed that a mold having a fine structure suitable for duplicating the PDP ribs as shown in Fig. 11 (electron micrograph) was formed. The surface region of the shape-imparting layer 22 (corresponding to the bottom surface of the cells encompassed by the ribs) 22b was substantially flat, and its width was about 100 µm.

### Comparative Example 1

### Production of master mold for duplicating PDP rib:

A glass substrate having a thickness of 5 mm, a width of 100 mm and a length of 100 mm was prepared to use it as a pattern support layer of a master mold. Here, glass used for the substrate was soda lime glass.

Next, a mask having sand blast resistance for patterning the glass substrate was formed on the glass substrate by use of the method described in Example 1. When measured, the open portion of the resulting mask had a rectangle of a length of 680 µm and a width of 230 µm. The open portions regularly repeated in a cycle of a length of 730 µm and a width of 280 µm, and the number was 108 in the longitudinal direction and 284 in the transverse direction. In other words, the total number of the rectangular open portions in the mask was 30,672. Incidentally, these open portions corresponded to discharge display cells of the PDP rib.

After the sand blast-resistant mask was formed in the manner described above, the surface layer of the glass substrate was ground by use of the sand blast method and only the exposed portions were selectively removed. The sand blast condition used hereby was the same as that of Example 1. Projection of the abrasives was continued until the depth of the deepest portion of the cut hole reached 200 µm.

After projection of the abrasives was completed, the unnecessary mask was peeled and removed by use of an aqueous sodium hydroxide solution, and washing with water was conducted, followed then by drying. There was thus obtained a master mold for duplicating PDP ribs in which the glass substrate was ground and removed substantially in V-shape at the open portions of the mask and remained as a projection pattern having a triangular sectional shape at portions corresponding to the ribs.

### Production of flexible mold:

To observe the condition of the fine structure of the master mold described above, the grid-like pattern of the master mold was transferred to a UV-curable composition and a flexible mold was produced. The procedure for producing the flexible mold was the same as that of Example 1. When the PET film and the shape-imparting layer were peeled from the master mold, there was obtained a flexible mold having a large number of V-shaped groove portions having a shape and a size corresponding to those of the projection pattern of the master mold.

The condition of the fine structure of the surface of the resulting flexible mold was observed through a scanning electron microscope (magnification 70X). It was observed that a grid-like groove pattern having longitudinal grooves having a pitch of 280 µm and a width of 50 µm at the upper end and transverse grooves having a pitch of 730 µm and a width of 50 µm at the upper end corresponding to the grid-like projection pattern of the master mold was formed on the PET film.

Next, the same flexible mold was cut vertically in the longitudinal direction, and the cut surface was observed through the scanning electron microscope (magnification 70X). It was confirmed that a mold having a fine structure not suitable for duplicating the PDP ribs as shown in Fig. 12 (electron micrograph) was formed. The surface region of the shape-imparting layer 22 (corresponding to the bottom surface of the cells encompassed by the ribs) 22c did not have flat portions, and curve shapes having R of about 25 to about 35 µm existed.

## Claims

1. A master mold comprising a support layer (1) comprised of a material and a fine structure pattern (4) comprised of a glass or ceramic material supported by said support layer; wherein the support layer (1) material has a lower grinding speed than the material of the fine structure pattern (4).

2. The master mold of claim 1, wherein said support layer (1) material is a metal material.

3. The master mold of any of claims 1 to 2 wherein the mold is suitable for making plasma display panel ribs.

4. The master mold of claims 1 to 2 wherein the mold is suitable for making microfluidic articles.

5. The master mold of claim 1 wherein said fine structure pattern (4) is a grid-like protrusion pattern comprising a plurality of ridge-like protrusions arranged substantially parallel while intersecting one another with predetermined gaps among them.

6. The master mold of claim 1, wherein said fine structure pattern (4) comprises ribs having;
a rib height of 150 to 300 µm
a rib pitch of 150 to 800 µm, and
a rib width of 50 to 80 µm.

7. The master mold of any of claims 1 to 6, wherein the fine structure pattern is a single layer.

8. The master mold of any of claims 1 to 7, wherein the support layer forms bottom portions of the fine structure pattern.

9. A method of producing a master mold (10) comprising the steps of:
forming a support layer (1) from a material;
depositing a layer (14) of a glass or ceramic material having a higher grinding speed than the material of the support layer (1) on said support layer to form a composite material layer;
forming a mask (3) on said composite material layer;
selectively removing said layer (14) of higher grinding speed material such that the support layer (1) is exposed; and
peeling said mask (3) from said layer of said high grinding speed material.

10. The method of claim 9 wherein said lower grinding speed material is a metal material.

11. The method of any of claims 9 to 10 wherein the higher grinding speed material is removed by sand blasting.

12. The method of any of claims 9 to 10 wherein the higher grinding speed material is removed by chemical etching.

13. The method of any claims 9 to 12 wherein the higher grinding speed material is formed by spraying, enameling or a sol-gel method.

14. The method of any of claims 9 to 13 wherein said mask (3) is formed by the steps of forming a layer of a mask-forming material on said composite material layer and then patterning it.into a desired shape by photolithography.

15. A method of making a flexible mold (20) comprising;
a) providing a master mold (10) according to any of claims claim 1 to 8;
b) applying an ultraviolet curable molding mater (22) to the master mold (10);
c) laminating a support film (21) to the master mold;
d) irradiating the molding material through the support film (21) thereby forming a flexible mold comprising the support film and a shape imparting layer bonded to support; and
e) separating the flexible mold (20) from the master mold (10).

## Patentansprüche

1. Urform, umfassend eine Trägerschicht (1), die aus einem Material besteht, und ein Feinstrukturmuster (4), das aus einem Glas- oder Keramikmaterial besteht und von der Trägerschicht getragen wird; wobei das Material der Trägerschicht (1) eine geringere Schleifgeschwindigkeit als das Material des Feinstrukturmusters (4) aufweist.

2. Urform nach Anspruch 1, wobei es sich bei dem Material der Trägerschicht (1) um ein Metallmaterial handelt.

3. Urform nach einem der Ansprüche 1 bis 2, wobei die Form zur Herstellung von Plasmaanzeigetafelrippen geeignet ist.

4. Urform der Ansprüche 1 bis 2, wobei die Form zur Herstellung von mikrofluiden Gegenständen geeignet ist.

5. Urform nach Anspruch 1, wobei es sich bei dem Feinstrukturmuster (4) um ein rasterartiges Vorsprungsmuster handelt, umfassend mehrere gratartige Vorsprünge, die im Wesentlichen parallel angeordnet sind, wobei sie sich mit vorbestimmten Zwischenräumen dazwischen schneiden.

6. Urform nach Anspruch 1, wobei das Feinstrukturmuster (4) Rippen umfasst, die Folgendes aufweisen:
eine Rippenhöhe von 150 bis 300 µm,
einen Rippenabstand von 150 bis 800 µm und
eine Rippenbreite von 50 bis 80 µm.

7. Urform nach einem der Ansprüche 1 bis 6, wobei es sich bei dem Feinstrukturmuster um eine einzige Schicht handelt.

8. Urform nach einem der Ansprüche 1 bis 7, wobei die Trägerschicht Unterabschnitte des Feinstrukturmusters bildet.

9. Verfahren zur Herstellung einer Urform (10), umfassend die folgenden Schritte:
Bilden einer Trägerschicht (1) aus einem Material;
Abscheiden einer Schicht (14) aus einem Glas- oder Keramikmaterial mit einer höheren Schleifgeschwindigkeit als das Material der Trägerschicht (1) auf der Trägerschicht unter Ausbildung einer Verbundmaterialschicht;
Bilden einer Maske (3) auf der Verbundmaterialschicht;
selektives Entfernen der Schicht (14) aus Material mit höherer Schleifgeschwindigkeit derart, dass die Trägerschicht (1) freiliegt; und
Abziehen der Maske (3) von der Schicht aus dem Material mit hoher Schleifgeschwindigkeit.

10. Verfahren nach Anspruch 9, wobei es sich bei dem Material mit geringerer Schleifgeschwindigkeit um ein Metallmaterial handelt.

11. Verfahren nach einem der Ansprüche 9 oder 10, wobei das Material mit höherer Schleifgeschwindigkeit durch Sandstrahlen entfernt wird.

12. Verfahren nach einem der Ansprüche 9 oder 10, wobei das Material mit höherer Schleifgeschwindigkeit durch chemisches Ätzen entfernt wird.

13. Verfahren nach einem der Ansprüche 9 bis 12, wobei das Material mit höherer Schleifgeschwindigkeit durch ein Sprüh-, Emaillier- oder ein Sol-Gel-Verfahren gebildet wird.

14. Verfahren nach einem der Ansprüche 9 bis 13, wobei die Maske (3) durch die Schritte der Bildung einer Schicht eines maskenbildenden Materials auf dem Verbundmaterial und dann Strukturieren davon in einer gewünschten Form mittels Photolithographie gebildet wird.

15. Verfahren zur Herstellung einer flexiblen Form (20), umfassend:
a) Bereitstellen einer Urform (10) nach einem der Ansprüche 1 bis 8;
b) Auftragen einer mit Ultraviolettlicht härtbaren Formsubstanz (22) auf die Urform (10);
c) Laminieren eines Trägerfilms (21) auf die Urform;
d) Bestrahlen des Formmaterials durch den Trägerfilm (21) unter Bildung einer flexiblen Form, die den Trägerfilm und eine mit dem Träger verbundene Formgebungsschicht umfasst; und
e) Trennen der flexiblen Form (20) von der Urform (10).

## Revendications

1. Moule-maître comprenant une couche de support (1) constituée d'un matériau et un fin motif structurel (4) constitué d'un matériau vitreux ou céramique soutenu sur ladite couche de support, dans lequel le matériau de la couche de support (1) a une vitesse de meulage plus basse que celle du matériau du fin motif structurel (4).

2. Moule-maître selon la revendication 1, dans lequel le matériau de ladite couche de support (1) est un matériau métallique.

3. Moule-maître selon l'une quelconque des revendications 1 ou 2, le moule convenant pour fabriquer des nervures de panneau d'affichage plasma.

4. Moule-maître selon les revendications 1 ou 2, le moule convenant pour fabriquer des articles microfluides.

5. Moule-maître selon la revendication 1, dans lequel ledit fin motif structurel (4) est un motif de saillies en grille qui comprend plusieurs saillies de type en arête agencées essentiellement en parallèle et se coupant mutuellement en laissant entre elles des interstices prédéterminés.

6. Moule-maître selon la revendication 1, dans lequel ledit fin motif structurel (4) comporte des nervures qui présentent :
une hauteur de nervure de 150 à 300 µm,
un pas entre nervures de 150 à 800 µm et
une largeur de nervure de 50 à 80 µm.

7. Moule-maître selon l'une quelconque des revendications 1 à 6, dans lequel le fin motif structurel est formé d'une monocouche.

8. Moule-maître selon l'une quelconque des revendications 1 à 7, dans lequel la couche de support forme des parties de fond du fin motif structurel.

9. Procédé de production d'un moule-maître (10), comprenant les étapes qui consistent à :
former une couche de support (1) en un matériau,
déposer sur ladite couche de support une couche (14) d'un matériau vitreux ou céramique dont la vitesse de meulage est plus haute que celle du matériau de la couche de support (1) pour former une couche de matériau composite,
former un masque (3) sur ladite couche de matériau composite,
retirer sélectivement ladite couche (14) de matériau à plus haute vitesse de meulage de manière à exposer la couche de support (1) et
décoller ledit masque (3) de ladite couche dudit matériau à haute vitesse de meulage.

10. Procédé selon la revendication 9, dans lequel ledit matériau à plus basse vitesse de meulage est un matériau métallique.

11. Procédé selon l'une quelconque des revendications 9 à 10, dans lequel le matériau à plus haute vitesse de meulage est enlevé par sablage.

12. Procédé selon l'une quelconque des revendications 9 à 10, dans lequel le matériau à plus haute vitesse de meulage est retiré par gravure chimique.

13. Procédé selon l'une quelconque des revendications 9 à 12, dans lequel le matériau à plus haute vitesse de meulage est formé par pulvérisation, par application d'un vernis ou par un procédé sol-gel.

14. Procédé selon l'une quelconque des revendications 9 à 13, dans lequel ledit masque (3) est formé par les étapes qui consistent à former une couche d'un matériau de formation de masque sur ladite couche de matériau composite et ensuite à la structurer par photolithographie pour obtenir la forme souhaitée.

15. Procédé de fabrication d'un moule flexible (20), qui comprend les étapes qui consistent à :
a) prévoir un moule-maître (10) selon l'une quelconque des revendications 1 à 8,
b) appliquer un matériau de moulage (22) durcissant aux ultraviolets sur le moule-maître (10),
c) stratifier un film de support (21) sur le moule-maître,
d) irradier le matériau de moulage à travers le film de support (21) pour ainsi former un moule flexible qui comprend le film de support et une couche de façonnage de forme liée au support et
e) séparer le moule flexible (20) du moule-maître (10).
